# EUROPEAN PATENT APPLICATION

(11) **EP 1 152 170 A1**
(43) Date of publication of application: **07.11.2001**
(21) Application number: 00109599.1
(22) Date of filing: 05.05.2000
(51) Int. Cl.: F16H 59/10

(54) **A position recognition arrangement**

(71) Applicant: Bayerische Motoren Werke Aktiengesellschaft, 80809 München (DE)
(72) Inventor: Gleich, Karl, 86424 Dinkelscherben (DE)

(57) **Abstract**

A position recognition arrangement (10) suitable for a selector (12, 14) in a vehicle is disclosed. The selector lever comprises a transmission selector of, for example, a motor cycle and has a plurality of valid selectable positions(1, N, 2, 3, 4, 5, 6). The position recognition arrangement comprises a series connected, resistance coded switch (10).

## Description

This invention relates to position recognition arrangements and in particular to a position recognition arrangement which is suitable for a selector lever of a motor vehicle.

It is known to provide a position recognition arrangement for a selector lever of a vehicle and one such arrangement is disclosed in US 5,748,112. In this arrangement, it is necessary to provide a separate control line for each selected position.

It is an object of this invention to provide an improved position recognition arrangement.

Accordingly, the invention provides a position recognition arrangement for a selector means of a vehicle, said selector means having a plurality of valid selectable positions, characterised in that said position recognition arrangement comprises a plurality of substantially discreet resistances connected in series, having within said series detection positions which correspond to said valid selectable positions, and further comprising a position detection means which is arranged in use to move between said detection positions in correspondence to a selection between said valid selectable positions, whereby each said detection position presents to said detection means an unique resistance and positions in between said detection positions present substantially no change in resistance.

Said series may be connected at one of said detection positions to an electric source and in such a manner that said detection positions comprise for said position detection means a potential divider across said series.

Said electric source may be connected across said position detection means and a said detection position which is at one end of said series.

Said position recognition arrangement may be arranged in use to provide to a user or to a control means a signal indicative of a selected said valid selectable position.

Said position recognition arrangement may comprise a resistance coded switch.

Said valid selectable positions may represent transmission ratios. Said recognition arrangement may comprise a gear ratio recognition means of a motor cycle transmission.

The invention will now be described by way of example only and with reference to the accompanying drawing, in which:

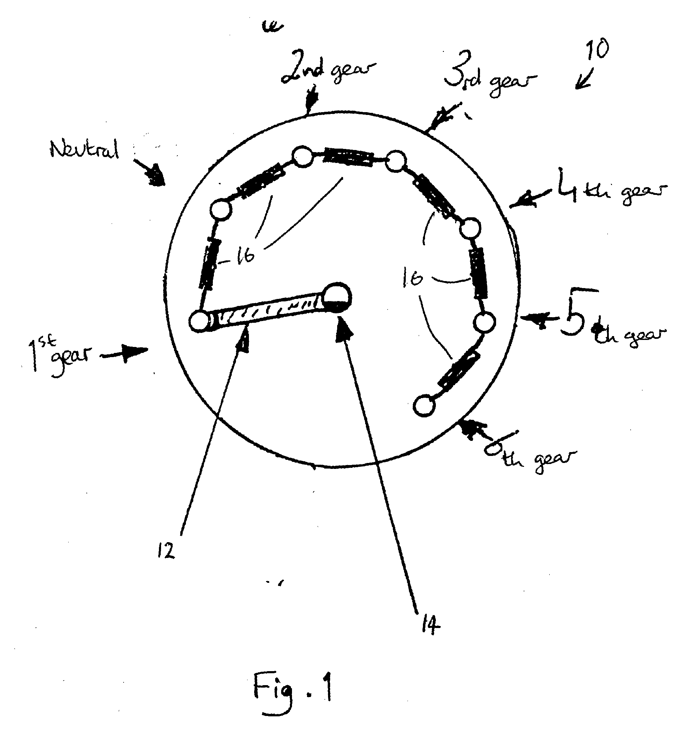

Figure 1 is a schematic representation of part of a position recognition arrangement according to the invention.

Referring to the figure, a motor cycle (not shown further) includes a transmission having six gear ratios selected using a gear selector in a "one-down-five-up" arrangement. A resistance coded switch 10 co-operates with the ratio selection lever in order to provide a signal to a control means (not shown) indicative of the selected ratio.

The control means converts this signal into a visual indication displayed on a display means so that a user can tell which ratio has been selected or whether the neutral position has been selected. The switch 10 comprises seven discreet positions which correspond to the selection of first gear 1^{st}, neutral N, second 2^{nd}, third 3^{rd}, fourth 4^{th}, fifth 5^{th} and sixth 6^{th} gears. The switch 10 includes a wiper 12 which is moved by a shaft 14 in co-operation with a selector drum.

The gear ratio positions are connected together in series by a series arrangement of discreet resistances 16. The wiper 12 and the first gear position are connected to a source of electrical potential.

By series connection of the resistances 16, each gear position will have a unique resistance. As the wiper 12 moves between the ratio positions, the voltage dropped across the resistances making up the series for that ratio will be different for each gear position. In this manner, a discreet voltage for each position is provided and intermediate positions are not falsely detected as validly selected positions.

Through the resistance coding, it can be seen that only two lines need to be provided to the gear selection indicator switch 10 of the present invention, i.e. one to one end of the series of resistances 16 and the other to the wiper 12.

This arrangement shows a saving of six lines when compared, for example, to the arrangement of US 5,748,112. While described in relation to motor cycle selector lever arrangements, it will be noted that this arrangement could be applied to other selector lever arrangements, such as that of US 5,748,112, so as to reduce the number of control lines necessary and provide protection against the inconvenience and uncertainty caused by potentially erroneous gear position indication.

## Claims

1. A position recognition arrangement for a selector means of a vehicle, said selector means having a plurality of valid selectable positions, **characterised in that** said position recognition arrangement (10) comprises a plurality of substantially discreet resistances (16) connected in series, having within said series detection positions (1, N, 2, 3, 4, 5, 6) which correspond to said valid selectable positions and further comprising a position detection means (12) which is arranged in use to move between said detection positions (1, N, 2, 3, 4, 5, 6) in correspondence to a selection between said valid selectable positions, whereby each said detection position (1, N, 2, 3, 4, 5, 6) presents to said detection means (12) an unique resistance and positions in between said detection positions (1, N, 2, 3, 4, 5, 6) present substantially no change in resistance.

2. An arrangement according to Claim 1, wherein said series is connected at one of said detection positions (1, N, 2, 3, 4, 5, 6) to an electric source and in such a manner that said detection positions (1, N, 2, 3, 4, 5, 6) comprise for said position detection means (12) a potential divider across said series.

3. An arrangement according to Claim 2, wherein said electric source is connected across said position detection means (12) and a said detection position (1st gear) which is at one end of said series.

4. An arrangement according any preceding claim, wherein said position recognition arrangement (12) is arranged in use to provide to a user or to a control means a signal indicative of a selected said valid selectable position.

5. An arrangement according to any preceding claim, said position recognition arrangement comprising a resistance coded switch.

6. An arrangement according to any preceding claim, said valid selectable positions representing transmission ratios.

7. A position recognition arrangement according to any preceding claim, comprising a gear ratio recognition means of a motor cycle transmission.
